# FASCICULE DE BREVET EUROPEEN

(11) **EP 1 510 445 B1**
(45) Date de publication et mention de la délivrance du brevet: **15.11.2006**
(21) Numéro de dépôt: 04300547.9
(22) Date de dépôt: 19.08.2004
(51) Int. Cl.: B62D 25/06

(54) **Structure de carrosserie d'un véhicule automobile**
Aufbaustruktur für ein Kraftfahrzeug
Body structure for an automobile

(30) Priorité: 26.08.2003 FR 0310182
(43) Date de publication de la demande: 02.03.2005
(73) Titulaire: Renault s.a.s., 92100 Boulogne Billancourt (FR)
(72) Inventeur: Pastourel, Dominique, 91790 Boissy sous Saint Yon (FR); Maiore, Stéphane, 78117 Chateaufort (FR)

(56) Documents cités:
- EP-A- 1 020 345
- US-A- 3 524 674
- US-A- 5 009 463
- US-A1- 2002 020 060
- ANONYMOUS: 'Mercedes F500 Concept - The F 500 Mind showcases the very latest technology' CONCEPTCAR.CO.UK, [en ligne] 10 Novembre 2003, XP002305839 Extrait de l'Internet: <URL:http://www.conceptcar.co.uk/news/artic les/newsarticle21.php> [extrait le 2004-03-15]

## Description

L'invention concerne une structure de véhicule automobile, et plus particulièrement une structure de carrosserie comprenant au moins une traverse avant de pavillon qui s'étend transversalement et qui assure le maintien d'un pare brise et du pavillon, une traverse arrière de pavillon qui s'étend sensiblement parallèlement à la traverse avant et dans la zone arrière du pavillon, deux brancards de pavillon longitudinaux qui relient une extrémité transversale de la traverse avant à l'extrémité correspondante de la traverse arrière, et un pavillon qui repose au moins sur les traverses avant et arrière et sur les brancards.

Le document EP 1020345 divulgue une telle structure, selon le préambule de la revendication 1.

Dans le but d'obtenir une structure de ce type suffisamment rigide, il est connu d'insérer transversalement, entre les brancards, des traverses de renfort sur lesquelles viennent s'appuyer le pavillon. Dans le cas d'un véhicule présentant un toit ouvrant, ces traverses de renfort sont situées de part et d'autre de ce toit ouvrant et peut ainsi soutenir le pavillon. Sur certains véhicules, il est proposé l'intégration d'un toit ouvrant panoramique qui s'étend sur l'intégralité du pavillon. Les traverses de renfort transversales sont alors supprimées. La rigidité d'une structure telle que décrite dans le paragraphe précédent, et sans traverses de renfort transversales, est alors assurée par le renforcement des pieds milieux, qui s'étendent verticalement entre la porte avant et la partie arrière de la carrosserie, ainsi que par le renforcement des montants de baie qui sont situés entre le pare brise et les vitres avant latérales.

Or, le surdimensionnement de ces éléments peuvent être pénalisant pour le conducteur, pour des raisons de visibilité et d'esthétiques du véhicule. Ce surdimensionnement va d'ailleurs à l'encontre des tendances actuelles qui amènent les constructeurs automobiles à réduire, voire supprimer les montants de baie comme les pieds milieux.

Il est donc un objectif de l'invention de présenter une structure de carrosserie du type décrit ci dessus, qui présente des caractéristiques de rigidité aptes à permettre l'utilisation d'une telle structure dans un véhicule sans pieds milieux fixe par rapport, à la structure et/ou sans montants de baie.

Pour atteindre cet objectif, la structure de carrosserie selon l'invention est caractérisée en ce que la structure comporte un élément de renfort qui s'étend entre la traverse arrière et la traverse avant de pavillon, la partie centrale de cet élément de renfort étant formée d'un profilé sensiblement longitudinal, et en ce que cet élément de renfort est lié à la traverse avant en au moins deux points.

La forme particulière de l'élément de renfort qui présente une fourche à au moins deux branches orientée vers l'avant contribue à donner une plus grande rigidité à l'ensemble, et permet au conducteur, dans le cas d'un véhicule à toit ouvrant panoramique, d'avoir une bonne luminosité par le toit et simultanément d'avoir l'expression d'une grande robustesse de l'ensemble.

Selon une caractéristique de l'invention, l'élément de renfort est lié aux extrémités de la traverse avant, de sorte qu'un noeud est formé par une extrémité de la traverse avant, par un brancard de pavillon et par l'élément de renfort.

Une telle liaison nodale de l'élément de renfort, avec deux éléments structurels que sont le brancard et la traverse de pavillon, offre une rigidité accrue de l'ensemble.

Cette liaison nodale peut être réalisée par l'intermédiaire d'un élément de liaison à trois branches, qui selon l'invention est solidaire du brancard de pavillon et qui présente des zones de réception dans lesquelles sont solidarisées l'élément de renfort et la traverse avant de pavillon.

Selon une caractéristique de l'invention, l'élément de renfort est lié à la traverse avant en un troisième point, de sorte que cet élément de renfort soit relié à la traverse avant à chaque extrémité de cette traverse, et qu'il soit relié sensiblement au centre de la traverse, dans le prolongement longitudinal de la partie centrale de l'élément de renfort.

L'ensemble des caractéristiques de l'élément de renfort par rapport à la traverse avant de pavillon peut également être repris par rapport à la traverse arrière de pavillon, pour atteindre les mêmes résultats. La structure de carrosserie selon l'invention est alors caractérisée en ce que la structure comporte un élément de renfort qui s'étend entre la traverse arrière et la traverse avant de pavillon, la partie centrale de cet élément de renfort étant formée d'un profilé sensiblement longitudinal, en ce que cet élément de renfort est lié à la traverse avant en au moins deux points, et/ou en ce que cet élément de renfort est lié à la traverse arrière en au moins deux points. L'élément de renfort peut être lié aux extrémités de la traverse arrière, de sorte qu'un noeud est formé par une extrémité de la traverse arrière, par un brancard de pavillon et par l'élément de renfort. Une liaison nodale peut être réalisée par l'intermédiaire d'un élément de liaison à trois branches, qui selon l'invention est solidaire du brancard de pavillon et qui présente des zones de réception dans lesquelles sont solidarisées l'élément de renfort et la traverse arrière de pavillon. L'élément de renfort peut être lié à la traverse arrière en un troisième point, de sorte que cet élément de renfort soit relié à la traverse arrière à chaque extrémité de cette traverse, et qu'il soit relié sensiblement au centre de la traverse, dans le prolongement longitudinal de la partie centrale de l'élément de renfort.

Selon une caractéristique de la présente invention, l'élément de renfort, la traverse avant de pavillon et/ou la traverse arrière de pavillon sont formés d'une seule pièce.

Selon une caractéristique de l'invention, l'élément de renfort est intégré dans le pavillon, la vitre formant le toit panoramique étant solidaire de l'élément de renfort.

Selon une caractéristique de l'invention, des éléments fonctionnels sont intégrés dans l'élément de renfort, dans sa partie centrale ou dans les parties reliant la partie centrale aux traverses avant et/ou arrière. A titre d'exemple, des dispositifs lumineux peuvent être mis à disposition au dessus de chacun des occupants du véhicule.

D'autres caractéristiques et avantages de l'invention apparaîtront à la lecture de la description détaillée qui suit pour la compréhension de laquelle on se reportera aux dessins annexés parmi lesquels:
- la figure 1 est une représentation schématique d'une structure de carrosserie selon l'invention,
- ia figure 2 est une vue éclatée d'un élément de liaison de la structure selon l'invention,
- la figure 3 est une représentation schématique d'une structure de carrosserie selon un second mode de réalisation de l'invention,
- la figure 4 est une représentation schématique d'une structure de carrosserie similaire à la figure 1 selon une variante de l'invention.

Dans la description qui va suivre, on adoptera à titre non limitatif une orientation longitudinale, verticale et transversale selon l'orientation traditionnellement utilisée dans l'automobile et indiquée par le trièdre L, V, T des différentes figures.

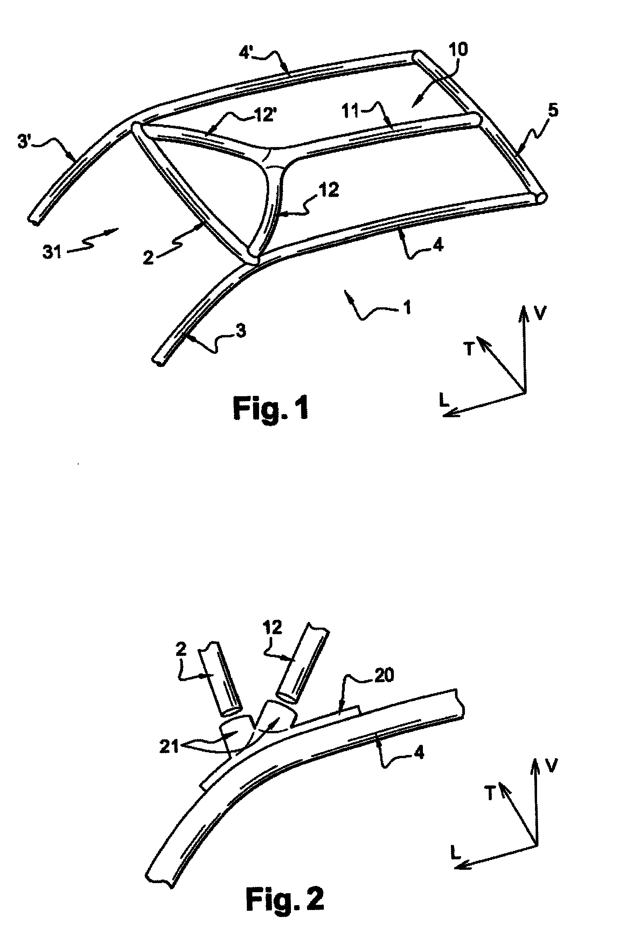

Tel que représenté à la figure 1, une structure de carrosserie 1 selon l'invention est formée d'une traverse avant de pavillon 3, qui est orientée transversalement au véhicule, dans la zone avant du pavillon. Cette traverse avant 2 est située entre les montants de baie 3 et 3', qui encadrent et soutiennent le pare brise 31, et les brancards de pavillon 4 et 4' qui s'étendent longitudinalement vers l'arrière du véhicule et qui supportent le pavillon. Ces brancards de pavillon 4 et 4' sont reliés à leur extrémité opposée au pavillon avant par une traverse de pavillon arrière 5, de sorte que l'ensemble formé par la traverse avant de pavillon 2, par les brancards de pavillon 4 et 4' et par la traverse arrière de pavillon 5 ait sensiblement la forme d'un parallélogramme.

Un élément de renfort 10 est intégré dans cet ensemble afin de rigidifier la structure de carrosserie 1. Selon un premier mode de réalisation, cet élément de renfort 10 est formé d'une partie centrale 11, sensiblement longitudinale et dont l'extrémité orientée vers l'arrière du véhicule est solidaire de la traverse arrière de pavillon. Cette partie centrale 11 est prolongée vers l'avant du véhicule par deux bras 12 et 12', de sorte que chacun des bras 12 et 12' soit solidarisé, vers l'avant du véhicule, à la traverse avant de pavillon 2. Cette liaison est réalisée en deux points, tel que représenté avantageusement à la figure 1, au niveau des intersections des brancards 14 et 14' et de la traverse avant 2.

Tel que représenté à la figure 2, un élément de liaison 20 (respectivement 20') à trois branches est solidaire du brancard de pavillon 4 (resp. 4') et présente des zones de réception 21 dans lesquelles sont solidarisées la traverse avant 2 et le bras 12 (resp. 12') au moment du montage des différents éléments de la structure de carrosserie 1. Ces éléments de liaison 20 et 20' permettent d'obtenir un noeud de connexion entre l'élément de renfort 10, les brancards de pavillon 4 et 4' et la traverse avant 2. La position de ce noeud de connexion, dans le prolongement des montants de baie 3 et 3', et à l'intersection de l'ensemble des éléments supportant le pavillon permet une prise en charge optimale des efforts.

L'élément de renfort 10 dans ce premier mode de réalisation présente donc une forme « en Y ». Il est réalisé par un profilé unique, de sorte que la partie centrale 11 et les bras 12 et 12' sont obtenus dans le même procédé en une seule et unique pièce. Certains éléments fonctionnels peuvent être intégrés par la suite dans l'élément de renfort. A titre d'exemple non représenté, des dispositifs lumineux peuvent être intégrés dans les bras 12 et 12', dans la partie de ces bras orientée vers les occupants du véhicule. Ainsi, le passager avant pourra déclencher le dispositif lumineux situé au dessus de lui par une pression sur un bouton situé également au dessus de lui ou sur une télécommande proche du siège.

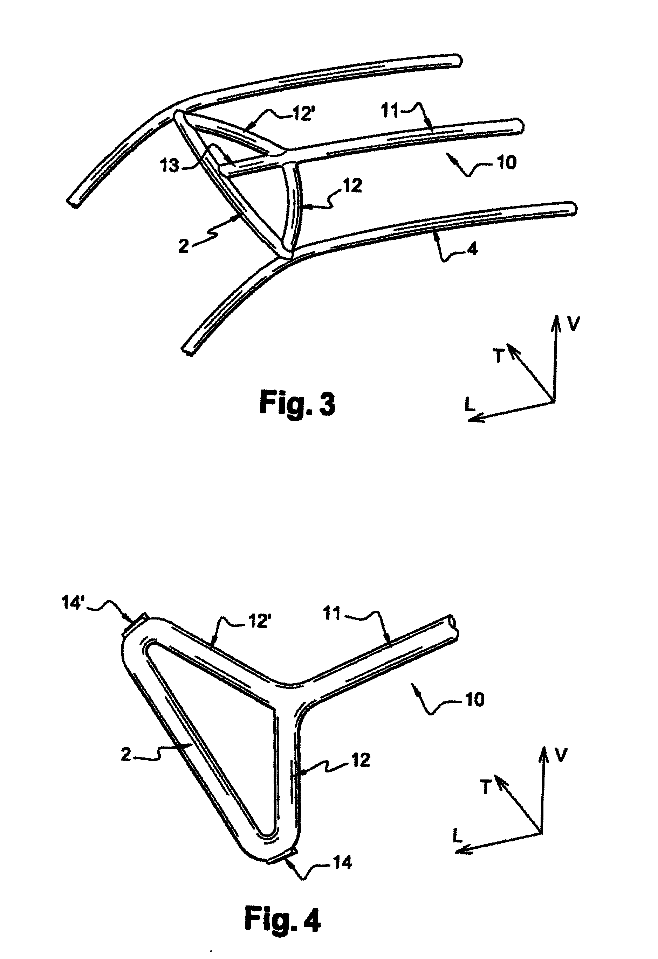

Selon un second mode de réalisation, l'élément de renfort 10 est formé comme précédemment d'une partie centrale 11, sensiblement longitudinale, et qui est prolongée vers l'avant du véhicule par deux bras 12, 12' de sorte que chacun des bras 12 et 12' soit solidarisé, vers l'avant du véhicule, à la traverse avant de pavillon 2. Dans ce mode de réalisation particulier, cette liaison est réalisée en trois points, tel que représenté à la figure 3, le troisième point de liaison étant assuré par le prolongement axial de la partie centrale 11 vers l'avant, qui forme un bras central 13. Le plus grand nombre de points de fixation de l'élément de renfort 10 sur la traverse avant 2 permet d'obtenir une structure plus rigide.

11 sera compris que la description ci dessus représente des modes de réalisation particulièrement rigide, mais que d'autres modes de réalisation dans lesquels les extrémités de l'élément de renfort 10 seraient solidarisées sur la traverse avant 2 à distance des intersections avec les brancards de pavillon 4 et 4', sont également dans le contexte de l'invention, à savoir offrir une rigidification de la structure de carrosserie par un élément de renfort 10 qui présente une partie centrale 11 et au moins deux points de liaison avec la traverse avant 2.

Tel que représenté à la figure 4, l'élément de renfort 10 et la traverse avant 2 peuvent êtreréalisés en une et unique pièce. Des éléments de fixation 14 et 14' sont alors prévus sur cette pièce unique de sorte à pouvoir assurer la fixation sur les éléments de liaison 20 et 20', ou directement sur les brancards 4 et 4' . Il sera compris qu'une telle pièce unique peut être obtenu avec un élément de renfort 10 à trois bras.

L'ensemble des caractéristiques décrites ci dessus de l'élément de renfort 10 par rapport à la traverse avant de pavillon 2 peut également être repris par rapport à la traverse arrière de pavillon 5, pour atteindre les mêmes résultats. On peut envisager une pièce « en Y » inversée par rapport à la représentation de la figure 1, avec une partie centrale 11, sensiblement longitudinale et dont l'extrémité orientée vers l'avant du véhicule, est solidaire de la traverse avant de pavillon 2. Cette partie centrale 11 est prolongée vers l'arrière du véhicule par deux bras 12 et 12', de sorte que chacun des bras 12 et 12' soit solidarisé, vers l'arrière du véhicule, à la traverse arrière de pavillon 5. Cette liaison est réalisée à titre d'exemple au niveau des intersections des brancards 14 et 14' et de la traverse avant 5. On peut également envisager, dans le même contexte de l'invention, un élément de renfort 1 0 avec une partie centrale 11 et qui est lié la traverse avant 2 en au moins deux points, et à la traverse arrière 5 en au moins deux points.

L'élément de renfort 10, dont les bras 12, 12' (et éventuellement le bras 13) et la partie centrale 11 sont formés d'une unique pièce, peut être obtenu par emboutissage ou en fonderie. Il peut être composé, à titre d'exemple, d'aluminium ou de matériaux composites.

Il pourra être envisagé, dans le contexte de l'invention, que les bras 12 et 12' de l'élément de renfort 10 sont fixés dans la zone de connexion du montant de baie 3 et du brancard de pavillon 4, et que la traverse avant 2 soit supprimée. Une telle réalisation permettrait l'obtention d'une structure restant rigide dans un contexte d'allégement. A titre d'exemple, l'élément de liaison 20 pourrait être, conformément à la description ci dessus, un élément à trois branches solidaire du brancard de pavillon 4. La zone de réception 21 correspondante à l'élément de renfort 10 recevrait alors le bras 12 de l'élément de renfort 10 et la zone de réception 21 correspondante à la traverse avant 2 ne recevrait alors aucun élément structurel.

## Revendications

1. Structure de carrosserie (1) d'un véhicule automobile, comprenant au moins une traverse avant de pavillon (2) qui s'étend transversalement et. qui assure le maintien d'un pare brise et du pavillon, une traverse arrière de pavillon (5) qui s'étend sensiblement parallèlement à la traverse avant (2) et dans la zone arrière du pavillon, deux brancards de pavillon (4, 4') longitudinaux qui relient une extrémité transversale de la traverse avant (2) à l'extrémité correspondante de la traverse arrière(5), et un pavillon qui repose au moins sur les traverses avant (2) et arrière (5) et sur les brancards (4 et 4'), la structure (1) comportant un élément de renfort (10) qui s'étend entre la traverse arrière (5) et la traverse avant (2) de pavillon, la partie centrale (11) de cet élément de renfort (10) étant formée d'un unique profilé sensiblement longitudinal, **caractérisée en ce que** cet élément de renfort (10) est lié à la traverse avant (2) et/ou à la traverse arriére (5) en au moins deux points.

2. Structure de carrosserie selon la revendication. 1, **caractérisée en ce que** l'élément de renfort (10) est lié aux extrémités de la traverse avant (2), de sorte qu'un noeud est formé par une extrémité de la traverse avant (2), par un brancard de pavillon (4) et par l'élément de renfort (10).

3. Structure de carrosserie selon la revendication 2, **caractérisée en ce qu'**elle comporte un élément de liaison à trois branches, qui est solidaire du brancard de pavillon (4) et qui présente des zones de réception dans lesquelles sont solidarisées l'élément de renfort (10) et la traverse avant de pavillon (2).

4. Structure de carrosserie selon la revendication 2 ou 3, **caractérisée en ce que** l'élément de renfort (10) est lié à la traverse avant (2) en un troisième point, de sorte que cet élément de renfort (10) soit relié à la traverse avant (2) à chaque extrémité de cette traverse (2), et qu'il soit relié sensiblement au centre de la traverse (2), dans le prolongement longitudinal de la partie centrale (11) de l'élément de renfort (10).

5. Structure de carrosserie selon la revendication 1 à 4, **caractérisée en ce que** l'élément de renfort (10) est lié aux extrémités de la traverse, arrière (5), de sorte qu'un noeud est formé par une extrémités de la traverse arrière (5), par un brancard de pavillon (4) et par l'élément de renfort (10).

6. Structure de carrosserie selon la revendication 5, **caractérisée en ce qu'**un élément de Liaison à trois branches est solidaire du brancard de pavillon (4) et présente des zones de réception dans lesquelles sont solidarisées l'élément de renfort (10) et la traverse arrière de pavillon (5).

7. Structure de carrosserie selon la revendication 5, **caractérisée en ce que** l'élément de renfort (10) est lié à la traverse arrière (5) en un troisième point, de sorte que cet élément de renfort (10) soit relié à la traverse arrière (5) à chaque extrémité de cette traverse (5), et qu'il soit relié sensiblement au centre de la traverse (5), dans le prolongement longitudinal de la partie centrale (11) de l'élément de renfort (10).

8. Structure de carrosserie selon l'une des revendications 1 à 7, **caractérisée en ce que** l'élément de renfort (10), la traverse avant de pavillon (2) et/ou la traverse arrière (5) de pavillon sont formés d'une seule pièce.

9. Structure de carrosserie selon l'une des revendications précédentes **caractérisée en ce que** l'élément de renfort (10) est intégré dans le pavillon, une vitre formant un toit panoramique étant solidaire de l'élément de renfort: (10).

10. Structure de carrosserie selon l'une des revendications précédentes, **caractérisée en ce que** des éléments fonctionnels sont intégrés dans l'élément de renfort (10), dans sa partie centrale (11) ou dans les bras (12, 12') reliant la partie, centrale (11) aux traverses avant (2) et/ou arrière (5).

11. Structure de carrosserie selon la revendication 10, **caractérisée en ce que** des dispositifs lumineux sont intégrés dans l'élément de renfort (10), au dessus des occupants du véhicule.

## Claims

1. Body structure (1) of a motor vehicle, comprising at least one front roof cross member (2) which lies transversely and which supports a windscreen and the roof, one rear roof cross member (5) which lies essentially parallel to the front cross member (2) and in the rear roof area, two longitudinal roof side members (4, 4') which connect one transverse end of the front cross member (2) to the corresponding end of the rear cross member (5), and a roof which rests at least on the front (2) and rear (5) cross members and the side members (4, 4'), the structure (1) comprising a reinforcing member (10) which lies between the rear roof cross member (5) and the front roof cross member (2), the central portion (11) of this reinforcing member (10) being made of a single essentially longitudinal metal section, **characterized in that** this reinforcing member (10) is connected to the front cross member (2) and/or the rear cross member (5) at at least two points.

2. Body structure according to Claim 1, **characterized in that** the reinforcing member (10) is connected to the ends of the front cross member (2), so that a node is formed by one end of the front cross member (2), a roof side member (4) and the reinforcing member (10).

3. Body structure according to Claim 2, **characterized in that** it comprises a connecting member with three branches, which is connected to the roof side member (4) and which has sockets into which are inserted the reinforcing member (10) and the front roof cross member (2).

4. Body structure according to Claim 2 or 3, **characterized in that** the reinforcing member (10) is connected to the front cross member (2) at a third point, so that this reinforcing member (10) is connected to the front cross member (2) at each end of this cross member (2), and so that it is connected essentially at the centre of the cross member (2), in the longitudinal extension of the central portion (11) of the reinforcing member (10).

5. Body structure according to Claims 1 to 4, **characterized in that** the reinforcing member (10) is connected to the ends of the rear cross member (5), so that a node is formed by one end of the rear cross member (5), a roof side member (4) and the reinforcing member (10).

6. Body structure according to Claim 5, **characterized in that** a connecting member with three branches is connected to the roof side member (4) and has sockets into which are inserted the reinforcing member (10) and the rear roof cross member (5).

7. Body structure according to Claim 5, **characterized in that** the reinforcing member (10) is connected to the rear cross member (5) at a third point, so that this reinforcing member (10) is connected to the rear cross member (5) at each end of this cross member (5), and so that it is connected essentially at the centre of the cross member (5), in the longitudinal extension of the central portion (11) of the reinforcing member (10).

8. Body structure according to any one of Claims 1 to 7, **characterized in that** the reinforcing member (10), the front roof cross member (2) and/or the rear roof cross member (5) are made in a single piece.

9. Body structure according to any one of the preceding claims, **characterized in that** the reinforcing member (10) is integrated with the roof, a glass sheet forming a panoramic roof being connected to the reinforcing member (10).

10. Body structure according to any one of the preceding claims, **characterized in that** functional components are integrated with the reinforcing member (10), in its central portion (11) or in the arms (12, 12') connecting the central portion (11) to the front (2) and/or rear (5) cross members.

11. Body structure according to Claim 10, **characterized in that** luminous devices are integrated with the reinforcing member (10), above the occupants of the vehicle.

## Patentansprüche

1. Aufbaustruktur (1) für ein Kraftfahrzeug, umfassend mindestens eine vordere Querstrebe (2) eines Karosserieoberteils, die sich quer erstreckt und den Halt einer Windschutzscheibe und des Karosserieoberteils sichert, eine hintere Querstrebe (5) eines Karosserieoberteils, die sich im Wesentlichen parallel zur vorderen Querstrebe (2) und in der hinteren Zone des Karosserieoberteils erstreckt, zwei Längsträger (4, 4') eines Karosserieoberteils, die ein Querende der vorderen Querstrebe (2) mit dem entsprechenden Ende der hinteren Querstrebe (5) verbinden, und ein Karosserieoberteil, das zumindest auf der vorderen (2) und hinteren (5) Querstrebe und den Längsträgern (4 und 4') aufliegt, wobei die Struktur (1) ein Verstärkungselement (10) umfasst, das sich zwischen der hinteren Querstrebe (5) und der vorderen Querstrebe (2) des Karosserieoberteils erstreckt, wobei der Mittelteil (11) dieses Verstärkungselements von einem einzigen im Wesentlichen länglichen Profil gebildet ist, **dadurch gekennzeichnet, dass** dieses Verstärkungselement (10) mit der vorderen Querstrebe (2) und/oder der hinteren Querstrebe (5) an mindestens zwei Punkten verbunden ist.

2. Aufbaustruktur nach Anspruch 1, **dadurch gekennzeichnet, dass** das Verstärkungselement (10) mit den Enden der vorderen Querstrebe (2) verbunden ist, so dass ein Knoten von einem Ende der vorderen Querstrebe (2), von einem Längsträger des Karosserieoberteils (4) und dem Verstärkungselement (10) gebildet wird.

3. Aufbaustruktur nach Anspruch 2, **dadurch gekennzeichnet, dass** sie ein Verbindungselement mit drei Zweigen umfasst, das mit dem Längsträger des Karosserieoberteils (4) verbunden ist und Aufnahmezonen besitzt, in denen das Verstärkungselement (10) und die vordere Querstrebe des Karosserieoberteils (2) miteinander verbunden sind.

4. Aufbaustruktur nach Anspruch 2 oder 3, **dadurch gekennzeichnet, dass** das Verstärkungselement (10) mit der vorderen Querstrebe (2) an einem dritten Punkt verbunden ist, so dass dieses Verstärkungselement (10) mit der vorderen Querstrebe (2) an jedem Ende dieser Querstrebe (2) verbunden ist, und dass es im Wesentlichen in der Mitte der Querstrebe (2) in der Längsverlängerung des Mittelteils (11) des Verstärkungselements (10) verbunden ist.

5. Aufbaustruktur nach Anspruch 1 bis 4, **dadurch gekennzeichnet, dass** das Verstärkungselement (10) mit den Enden der hinteren Querstrebe (5) verbunden ist, so dass ein Knoten von einem Ende der hinteren Querstrebe (5), von einem Längsträger des Karosserieoberteils (4) und dem Verstärkungselement (10) gebildet wird.

6. Aufbaustruktur nach Anspruch 5, **dadurch gekennzeichnet, dass** ein Verbindungselement mit drei Zweigen mit dem Längsträger des Karosserieoberteils (4) verbunden ist und Aufnahmezonen aufweist, in denen das Verstärkungselement (10) und die hintere Querstrebe des Karosserieoberteils (5) miteinander verbunden sind.

7. Aufbaustruktur nach Anspruch 5, **dadurch gekennzeichnet, dass** das Verstärkungselement (10) mit der hinteren Querstrebe (5) in einem dritten Punkt verbunden ist, so dass dieses Verstärkungselement (10) mit der hinteren Querstrebe (5) an jedem Ende dieser Querstrebe (5) verbunden ist und dass es im Wesentlichen in der Mitte der Querstrebe (5) in der Längsverlängerung des Mittelteils (11) des Verstärkungselements (10) verbunden ist.

8. Aufbaustruktur nach einem der Ansprüche 1 bis 7, **dadurch gekennzeichnet, dass** das Verstärkungselement (10), die vordere Querstrebe des Karosserieoberteils (2) und/oder die hintere Querstrebe (5) des Karosserieoberteils aus einem Stück sind.

9. Aufbaustruktur nach einem der vorhergehenden Ansprüche, **dadurch gekennzeichnet, dass** das Verstärkungselement (10) in den Karosserieoberteil integriert ist, wobei eine Scheibe, die ein Panoramadach bildet, mit dem Verstärkungselement (10) verbunden ist.

10. Aufbaustruktur nach einem der vorhergehenden Ansprüche, **dadurch gekennzeichnet, dass** Funktionselemente in das Verstärkungselement (10) in seinen Mittelteil (11) oder in die Arme (12, 12'), die den Mittelteil (11) mit der vorderen (2) und/oder hinteren (5) Querstrebe verbinden, integriert sind.

11. Aufbaustruktur nach Anspruch 10, **dadurch gekennzeichnet, dass** Leuchtvorrichtungen in das Verstärkungselement (10) über den Fahrzeuginsassen integriert sind.
